# EUROPÄISCHE PATENTSCHRIFT

(11) **EP 1 478 532 B1**
(45) Veröffentlichungstag und Bekanntmachung des Hinweises auf die Patenterteilung: **08.06.2005**
(21) Anmeldenummer: 03742952.9
(22) Anmeldetag: 21.02.2003
(51) Int. Cl.: B60H 1/34

(54) **BELÜFTUNGSEINRICHTUNG**
VENTILATING SYSTEM
DISPOSITIF DE VENTILATION

(30) Priorität: 28.02.2002 DE 10209074
(43) Veröffentlichungstag der Anmeldung: 24.11.2004
(73) Patentinhaber: Faurecia Innenraum Systeme GmbH, 76767 Hagenbach (DE)
(72) Erfinder: METZ, Peter, 67482 Freimersheim (DE)
(74) Vertreter: Pfenning, Meinig & Partner GbR
(86) Internationale Anmeldenummer: PCT/EP2003/001841
(87) Internationale Veröffentlichungsnummer: WO 2003/072379

(56) Entgegenhaltungen:
- DE-A- 3 407 670
- DE-A- 4 403 096
- DE-C- 4 327 266
- US-A- 5 733 191

## Beschreibung

Die vorliegende Erfindung betrifft eine Belüftungseinrichtung für eine Instrumententafel eines Kraftfahrzeugs oder dergleichen.

An eine Belüftungseinrichtung werden vielfältige Anforderungen gestellt. So ist es z.B. insbesondere im Bereich unterhalb der Windschutzscheibe bei Kraftfahrzeugen sinnvoll, eine diffuse, die Fahrzeuginsassen nicht direkt anströmende Strömung, z.B. gegen ein Beschlagen der Windschutzscheibe, vorzusehen. Andererseits kann es wünschenswert sein die Fahrzeuginsassen, z.B. im Sommer, mit kalter Luft direkt anzuströmen bzw. im Winter mit warmer Luft zu versorgen.

Zur Erfüllung dieser Anforderungen sind mehrere Konzepte von Belüftungseinrichtungen bekannt.

Zum einen ist es möglich, in einer Instrumententafel einerseits kleinlöchrige Öffnungen zur Erzeugung einer diffusen Strömung vorzusehen. Zusätzlich können daneben auch lamellenartige Öffnungen vorgesehen werden, welche durch Einstellung der Lamellenneigung eine in die gewünschte Richtung verlaufende Luftströmung erzeugen. Der Nachteil einer solchen Anordnung besteht jedoch darin, daß somit auf der Instrumententafel relativ viel Platz benötigt wird und daß daher, insbesondere bei modernen hochpreisigen Fahrzeugen, Fläche anderweitig schwer nutzbar wird (etwa für großflächige Bildschirme einer Navigationsvorrichtung etc.).

Die Deutsche Offenlegungsschrift DE 44 03 096 A1 schlägt daher ein anderes Konzept vor. Hier ist ein einziger Luftkanal zum Heranführen von Luft gezeigt. An seinem Ausgangsquerschnitt ist der Luftkanal mit einem gelenkig gelagerten winkligen Bauteil versehen, welches mit Ausströmöffnungen zum Ausströmen von Luftströmung in einen Fahrzeuginnenraum versehen ist. In einer ersten Stellung überbrückt eine Platte des winkelförmigen Bauteils den Ausgangsquerschnitt des Luftkanals, so daß lediglich durch kleine Öffnungen in dieser Platte ein diffuser Luftstrom entweichen kann. Bei Herausklappen des winkelartigen Bauteils kann durch einen offenen Winkel, welcher mit Lamellen versehen ist, eine gerichtete Strömung entweichen.

Dieses Bauteil weist zwar das Merkmal auf, daß mit geringem Platzbedarf sowohl diffuse als auch gerichtete Strömung aus demselben Luftkanal mit geringem Platzbedarf entweichen kann. Nachteilig ist jedoch, daß bei geöffnetem winkelartigen Bauteil neben der gerichteten Strömung unverändert auch weiterhin Strömung durch die kleinen Öffnungen zur Erzeugung einer diffusen Luftschicht entweicht. Hierdurch kommt es zu einem ungeordneten Strömungsbild, die Gleichrichtung der Luftströmung aus den Lamellenabschnitten wird gestört, außerdem sind unnötigerweise kräftige Lüfter notwendig, welche die nicht benötigte diffuse Luftströmung erzeugen müssen.

Das Dokument US 5 733 191, das den nächsten Stand der Technik bildet, offenbart weiter eine Belüftungseinrichtung wobei in einem ersten Bewegungszustand der Verstelleinrichtung die zum Fahrzeuginnenraum hin gerichtete Luftströmung nur durch erste Ausströmöffnungen und in einem zweiten Bewegungszustand nur durch zweite Ausströmöffnungen ausströmt. Dadurch wird eine klare Trennung zwischen den Strömungsarten erreicht. So ist es z.B. möglich, daß in dem ersten Bewegungszustand Ausströmöffnungen geringen Durchmessers zur Durchströmung benutzt werden, welche fahrzeuginnenraumseitig eine diffuse Strömung erzeugen. Durch Überführen der Verstelleinrichtung in den zweiten Bewegungszustand können dann ausschließlich die zweiten Ausströmöffnungen angesteuert werden, so daß diese (z.B. wenn sie lamellenförmig ausgeführt sind) eine im Wesentlichen gerichtete Strömung ermöglichen.

Ausgehend von diesen bekannten Belüftungseinrichtungen liegt der vorliegenden Erfindung die Aufgabe zugrunde, eine Belüftungseinrichtung zu schaffen, welche einerseits platzsparend und kostengünstiger herstellbar ist und andererseits eine strikte Trennung zwischen z.B. rein gerichteter Luftströmung sowie primär diffuser Luftströmung ermöglicht.

Diese Aufgabe wird durch eine Belüftungseinrichtung nach dem Anspruch 1 gelöst.

Hierbei weist eine an einem Fixgelenk gelenkig gelagerte Ausströmplatte erste Ausströmöffnungen, welche vorteilhafterweise als Ausströmöffnung zur Erzeugung diffuser Strömung ausgefügt sind auf. Im ersten Bewegungszustand überbrückt hierbei die Ausströmplatte im Wesentlichen den Luftkanal, so daß es zu einem Ausströmen rein diffuser Luftströmung kommt. Außerdem ist jedoch eine beidseits gelenkig gelagerte Steuerplatte vorgesehen, wobei die eine Seite der Steuerplatte an der Ausströmplatte und die andere Seite der Steuerplatte an einer Linearführung gelenkig gelagert ist. Hiermit ist es möglich, daß die Steuerplatte beim Aufklappen der Ausströmplatte (d.h. wenn die Ausströmplatte den Ausgangsquerschnitt des Luftkanals nicht mehr überbrückt) somit den Weg für die aus dem Luftkanal ausströmende Luft freigibt. Hierbei ist die Steuerplatte außerdem so anzuordnen, daß die Steuerplatte eine Wand des Luftkanals bildet, so daß ausschließlich die Luft an der Steuerplatte vorbei in den Fahrzeuginnenraum strömt, ohne mit der Ausströmplatte und deren kleinflächigen Öffnungen in Berührung zu kommen.

Hierbei bleiben die Vorteile von raumsparender Anordnung und einer Kostengünstigen Fertigungsmöglichkeit voll erhalten. Die Belüftungseinrichtung bleibt kleinbauend, somit bleibt genügend Platz für weitere Einrichtungen, wie etwa Navigationseinrichtungen etc.

Eine besonders vorteilhafte Ausführungsform sieht vor, daß die ersten Ausströmöffnungen aufgrund ihres Öffnungsverhältnisses zur Erzielung diffuser Strömung und die zweiten Ausströmungsöffnungen, welche vorteilhafterweise als Öffnungen zwischen Lamellen ausgeführt sind, zur Erzielung gerichteter Strömung vorgesehen. Selbstverständlich ist es jedoch auch möglich, beide Arten von Ausströmöffnungen jeweils mit Lamellen oder jeweils nur mit kleinflächigen Löchern zu versehen. Hierbei ist es besonders vorteilhaft, daß in dem offenen Winkelbereich, welcher sich beim Herausklappen der Ausströmplatte ergibt, Lamellen vorgesehen sind, zwischen denen sich dann (also quasi anstatt einer einzigen großen Ausströmöffnung) mehrere zweite Ausströmöffnungen befinden; durch die Lamellen ist hierbei eine Richtungsvorgabe der durch die Lamellen strömenden Luftströmung gegeben. Hierbei stellt die Steuerplatte eine strömungstechnische Trennung zwischen ersten Ausströmöffnungen (kleinflächige Löcher) und zweiten Ausströmöffnungen (Öffnungen zwischen Lamellen) dar.

Eine besonders vorteilhafte Ausführungsform sieht vor, daß die ersten Ausströmöffnungen so ausgeführt sind, daß durch Verstärkung der Intensität des Luftstroms die Verstelleinrichtung aus dem ersten in den zweiten Bewegungszustand überführbar ist. Dies liegt daran, daß der Strömungswiderstand durch die kleinflächigen Löcher (erste Ausströmöffnungen) im ersten Bewegungszustand sehr viel höher sind als der Strömungswiderstand der zweiten Ausströmöffnungen. Somit kann es dazu kommen, daß bei einer Erhöhung der Strömungsintensität die Ausströmplatte quasi durch den Luftdruck aufgeklappt wird und somit das System den Zustand mit dem wenigsten Strömungswiderstand (also den zweiten Bewegungszustand) sucht. Dieser Vorgang kann außerdem selbstverständlich durch geeignet angeordnete Federn konstruktiv unterstützt werden.

Es ist außerdem möglich, die Austrittrichtung der Luftströmung aus den zweiten Austrittsöffnungen (also den Öffnungen zwischen den Lamellen) durch die Intensität des Luftstroms zu ändern. Dies ist z.B. dadurch möglich, daß vom Luftkanal ein Trennluftstrom abgetrennt wird, welcher z.B. seitlich die Lamellen anströmt und somit für deren Verstellung sorgt. Somit wird (ohne einen kostenintensiven und wartungsbedürftigen Elektromotor) erreicht, daß eine Verstellbarkeit der Lamellen gegeben ist. Als Regelgröße dient hierbei die Intensität des Luftstroms, für welche der sowieso vorhandene Lüftermotor mit dessen Regelung die Grundlage bildet. Somit ist es z.B. für einen allein reisenden Fahrer ohne verkehrsgefährdende manuelle Maßnahmen möglich, z.B. an der weit abgewandten Beifahrerseite eine Lamellenverstellung einfach durch Hochregeln des Lüfters vorzunehmen.

Auf diese Weise ist es außerdem auch möglich, mittels einer Steuereinrichtung zur zeitlich veränderbaren Regelung der Intensität der Luftströmung einen sogenannten Pendelbetrieb herzustellen, welcher somit aufgrund von Strömungsintensitätsveränderungen eine unterschiedliche Neigung der Lamellen erzeugt und somit ohne aufwendige Stellmotore eine gleichmäßige Belüftung des gesamten Fahrzeuginnenraums gewährleisten kann.

Als besonders geeignete Orte für eine erfindungsgemäße Belüftungseinrichtung bieten sich hierbei insbesondere die Instrumententafel eines Kraftfahrzeuges, im Wesentlichen in dessen mittigem oberen Bereich, jedoch auch im Bereich der A-Säulen an.

Weitere vorteilhafte Weiterbildungen der vorliegenden Erfindung werden in den übrigen abhängigen Ansprüchen angegeben.

Die vorliegende Erfindung wird nun anhand mehrerer Figuren erläutert. Es zeigen:
- Fign. 1a bis 1c: Schnittdarstellung einer erfindungsgemäßen Belüftungseinrichtung in einer Instrumententafel eines Kraftfahrzeuges,
- Fig. 2: den Querschnitt einer erfindungsgemäßen Belüftungseinrichtung im Detail.

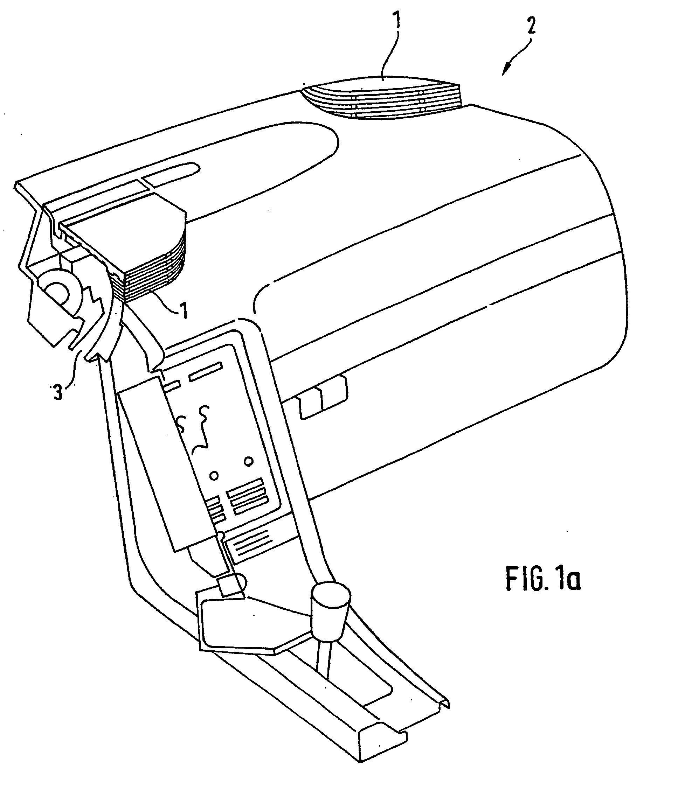

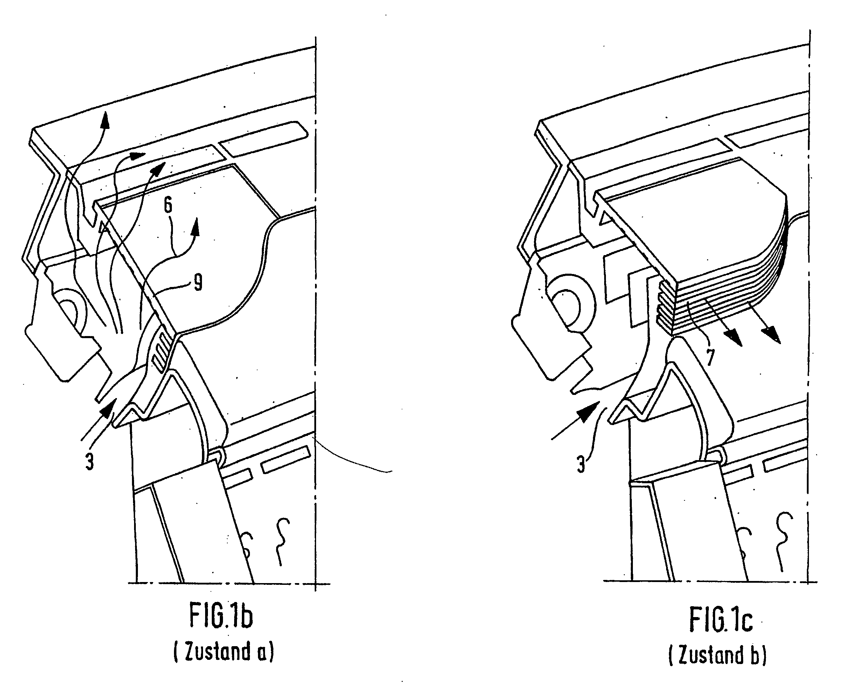

Fig. 1a zeigt zwei erfindungsgemäße Belüftungseinrichtungen 1 in einer Instrumententafel eines Kraftfahrzeugs. Zur besseren Übersicht ist lediglich die rechte Hälfte der Instrumententafel abgeschnitten gezeigt. Beide Belüftungseinrichtungen 1 befinden sich in einem ausgeklappten Zustand, in welchem eine gerichtete Luftströmung aus Lamellenöffnungen heraus möglich ist.

Fig. 1b zeigt für die mittlere Belüftungseinrichtungen den eingeklappten Zustand (im Folgenden als Zustand a bezeichnet), bei dem durch kleine Öffnungen in der Oberfläche der Ausströmplatte 9 eine diffuse Strömung in den Fahrzeuginnenraum gelangt.

Fig. 1c zeigt wiederum im Detail den ausgeklappten Zustand der Ausströmplatte 9, bei welcher ein Ausströmen durch die Lamellenöffnungen hindurch gerichtet in den Innenraum erfolgt (dies wird im Folgenden als Zustand b bezeichnet).

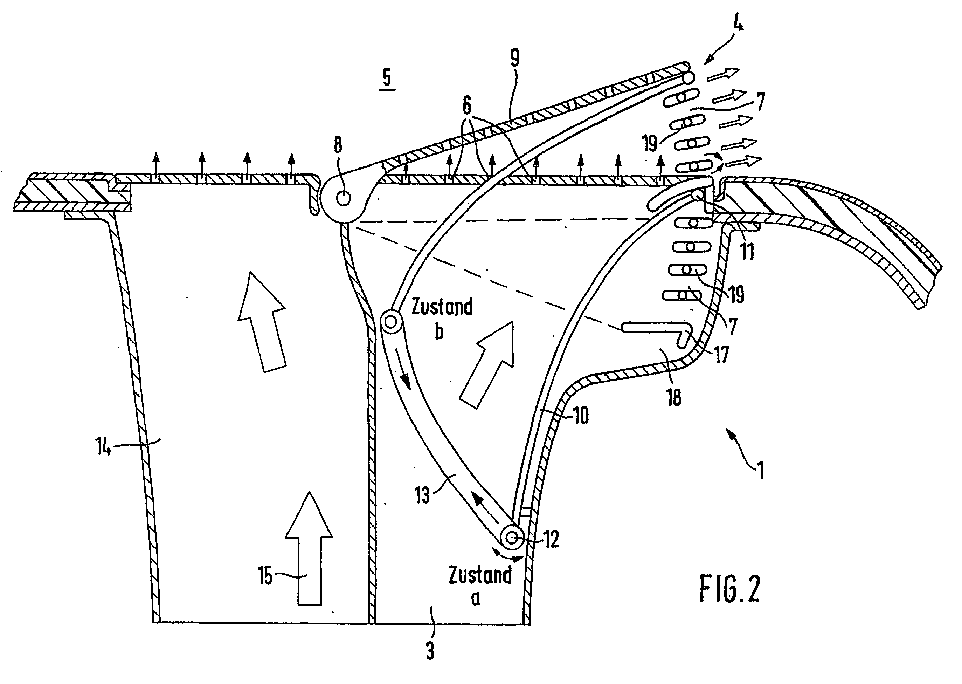

Fig. 2 zeigt den Querschnitt durch eine erfindungsgemäße Belüftungseinrichtung.

Auf der linken Bildhälfte ist ein abgetrennter Nebenluftkanal 14 zu sehen, durch welchen Luft in Richtung 15 durch einen Diffusor in den Fahrzeuginnenraum gelangt. Im Folgenden soll jedoch die erfindungsgemäße Belüftungseinrichtung 1 in der rechten Bildhälfte erläutert werden. Diese ist Teil einer Instrumententafel 2 eines Kraftfahrzeugs. Sie weist einen Luftkanal 3, welcher sich nach oben hin erweitert, zum Heranführen von Luft von einem Gebläse zu dem Fahrzeuginnenraum hin auf. Außerdem ist eine Verstelleinrichtung 4 vorgesehen zum Steuern von zu dem Luftkanal 3 zugeführter Luft.

Es sei angemerkt, daß in Fig. 2 zwei Bewegungszustände der Verstelleinrichtung 4 übereinander dargestellt sind. Dies ist zum einen der mit a bezeichnete erste Bewegungszustand, bei dem die Ausströmplatte 9 im Wesentlichen den Ausgangsquerschnitt des Luftkanals 3 bedeckt bzw. überbrückt und andererseits der zweite Bewegungszustand b, bei dem die Ausströmplatte 9 sich im ausgeklappten Zustand zeigt und nicht mehr den Ausgangsquerschnitt des Luftkanals 3 überbrückt.

Die Verstelleinrichtung 4 weist unter anderem eine Ausströmplatte 9 auf. Diese weist erste Ausströmöffnungen 6 auf, welche einen kleinflächigen Querschnitt aufweisen und bei Strömung der Luft in Richtung des Fahrzeuginnenraums dort eine im Wesentlichen diffuse Luftströmung erzeugen. Die Ausströmplatte 9 ist an einem Fixgelenk 8 gelenkig gelagert. Außerdem weist die Ausströmplatte 9 an ihrer dem Fixgelenk 8 abgewandten Seite (im Zustand b rechts oben zu sehen) ein weiteres Gelenk auf, welches die Ausströmplatte 9 gelenkig mit einer Steuerplatte 10 verbindet. Die Steuerplatte 10 ist auf ihrer gegenüber liegenden Seite wiederum in einer leicht gekrümmten linearen Führungsschiene 13 gelenkig gelagert bzw. geführt. Im Bewegungszustand b befindet sich dieses Gelenk im oberen Totpunkt der Führungsschiene 13. Im Bewegungszustand a befindet sich dieses Gelenk im unteren Totpunkt der Führungsschiene 13. Die Steuerplatte 10 ist im Wesentlichen luftdicht ausgeführt, so daß im Bewegungszustand a die rechte Kanalwand durch die Steuerplatte 10 gebildet wird und somit die Luftströmung im Wesentlichen senkrecht diffus aus der Ausströmplatte 9 herausströmt.

Die Ausströmplatte 9 weist im Übrigen einen im Winkel angeordneten Zusatzabschnitt 17 auf, welcher durch die Steuerplatte 10 von den ersten Ausströmöffnungen 6 abgetrennt ist und im Bewegungszustand a sich in einem Totraum 18 des Luftkanals 3 befindet, welcher in diesem Zustand nicht von Luft durchströmt wird.

Im Folgenden wird nun auf den Bewegungszustand b näher eingegangen. Hierbei befindet sich, wie bereits oben gesagt, die Ausströmplatte 9 in ihrer nach oben hin abgewinkelten Stellung. Der winkelartig abstehende Abschnitt 17 der Ausströmplatte 9 befindet sich hierbei mit seinen Lamellen 7 im Bereich des Öffnungswinkels. Die Steuerplatte 10 sorgt dafür, daß in diesem zweiten Bewegungszustand lediglich Luft durch die als Lamellenöffnungen ausgeführten zweiten Ausströmöffnungen herausströmt, hierbei stellt die im Wesentlichen luftdichte Steuerplatte 10 eine linke Begrenzungswand für die heraustretende Strömung dar. Bei dieser Strömung handelt es sich um eine gerichtete Strömung, die Lamellen 19 sind verstellbar angeordnet, so daß auf verschiedene Weise eine Verstellung der Anströmrichtung in den Fahrzeuginnenraum möglich ist.

Die ersten Ausströmöffnungen 6 zur Herstellung einer diffusen Strömung in den Fahrzeuginnenraum bewirken einen sehr viel höheren Strömungswiderstand auf das vorgeschaltete, hier nicht dargestellte Gebläse der Belüftungseinrichtung. Die Verstelleinrichtung 4 ist insgesamt so ausgestaltet, daß bei einem Schwellenwert der Intensität des Luftstroms diese sich mit ihrer Ausströmplatte 9 nach oben bewegt und somit den Zustand kleinsten Strömungswiderstandes anstrebt. Hierbei ist es möglich, etwa über einen Federmechanismus ein klares Umschalten vom ersten in den zweiten Bewegungszustand zu ermöglichen. Außerdem liegt es im Rahmen der Erfindung, über nicht dargestellte weitere Luftströme eine Verstellung der Lamellen 19 und somit eine Einstellung der Richtung der gerichteten Strömung durch die zweiten Ausströmöffnungen 7 zu erreichen, dies kann nach Maßgabe einer erfindungsgemäßen Steuereinrichtung auch im oben bereits erwähnten Pendelbetrieb geschehen.

## Patentansprüche

1. Belüftungseinrichtung (1) für eine Instrumententafel (2) eines Kraftfahrzeugs oder dergleichen, mit einem Luftkanal (3) zum Heranführen von Luft, einer Verstelleinrichtung (4) zum Steuern von zu dem Luftkanal zugeführter Luft, wobei die Verstelleinrichtung Ausströmöffnungen (6, 7) zum Ausströmen von Luftströmung in den Fahrzeuginnenraum (5) aufweist, wobei die Verstelleinrichtung so ausgebildet ist, dass in einem ersten Bewegungszustand (a) der Verstelleinrichtung die zum Fahrzeuginnenraum hin gerichtete Luftströmung nur durch erste Ausströmöffnungen (6) und in einem zweiten Bewegungszustand (b) nur durch zweite Ausströmöffnungen (7) ausströmt, und eine an einem Fixgelenk (8) gelenkig gelagerte Ausströmplatte (9) mit den ersten Ausströmöffnungen (6) versehen ist und die Ausströmplatte im ersten Bewegungszustand (a) den Ausgangsquerschnitt des Luftkanals (3) überbrückt und die Belüftungseinrichtung eine beidseits gelenkig gelagerte Steuerplatte (10) aufweist, wobei eine Seite (11) der Steuerplatte an der Ausströmplatte und die andere Seite (12) an einer Linearführung (13) gelenkig gelagert ist.

2. Belüftungseinrichtung nach Anspruch 1, **dadurch gekennzeichnet, dass** die ersten Ausströmöffnungen (6) zur Erzielung diffuser Strömung und die zweiten Ausströmöffnungen (7) zur Erzielung gerichteter Strömung vorgesehen sind.

3. Belüftungseinrichtung nach einem der vorhergehenden Ansprüche, **dadurch gekennzeichnet, dass** die Ausströmplatte (9) an der dem Fixgelenk (8) abgewandten Seite winklig zu der übrigen Ausströmplatte angeordnete Zwischenlamellen (19) befindliche zweite Ausströmöffnungen (7) aufweist.

4. Belüftungseinrichtung nach einem der vorhergehenden Ansprüche, **dadurch gekennzeichnet, dass** erste (6) und zweite (7) Ausströmöffnungen durch die Steuerplatte (10) getrennt sind.

5. Belüftungseinrichtung nach einem der vorhergehenden Ansprüche, **dadurch gekennzeichnet, dass** die ersten Ausströmöffnungen (6) so ausgestaltet sind, dass durch Verstärkung der Intensität des Luftstroms die Verstelleinrichtung (4) aus dem ersten (a) in den zweiten (b) Bewegungszustand überführbar ist.

6. Belüftungseinrichtung nach einem der vorhergehenden Ansprüche, **dadurch gekennzeichnet, dass** die Austrittsrichtung der Luftströmung aus den zweiten Austrittsöffnungen (7) durch die Intensität des Luftstroms änderbar ist.

7. Belüftungseinrichtung nach Anspruch 6, **dadurch gekennzeichnet, dass** eine Steuereinrichtung zur zeitlich veränderbaren Regelung der Intensität der Luftströmung vorgesehen ist.

8. Belüftungseinrichtung nach einem der vorhergehenden Ansprüche, **dadurch gekennzeichnet, dass** diese an der Oberseite einer Instrumententafel (2) eines Kraftfahrzeugs im Wesentlichen mittig angeordnet ist.

## Claims

1. Ventilating device (1) for an instrument panel (2) of a motor vehicle or the like, with an air channel (3) for delivering air, an adjusting device (4) for controlling air supplied to the air channel, and the adjusting device comprises outlet openings (6, 7) to allow an airflow to be released into the vehicle cabin (5), and the adjusting device is designed in such a manner that in a first state of movement (a) of the adjusting device the airflow oriented towards the vehicle cabin exits only through first outlet openings (6) and in a second state of movement (b) only through second outlet openings (7), and an outlet plate (9) which is hinged onto a fixed hinge (8), is provided with the first outlet openings (6) and the outlet plate (9) in the first state of movement (a) bridges the outlet cross-section of the air channel (3), and the ventilating device comprises a control plate (10) which is on both sides hinge mounted, and one side (11) of the control plate is hinge mounted on the outlet plate and the other side (12) on a linear guide (13).

2. Ventilating device according to Claim 1, **characterised in that** the first outlet openings (6) are provided for delivering a diffused flow, and the second outlet openings (7) for offering a directional flow.

3. Ventilating device according to one of the above claims, **characterised in that** the outlet plate (9) comprises at the side facing away from the fixed hinge (8) intermediate lamellae (19) at an angle relative to the remaining outlet plate and second outlet openings (7).

4. Ventilating device according to one of the above claims, **characterised in that** first (6) and second (7) outlet openings are separated by the control plate (10).

5. Ventilating device according to one of the above claims, **characterised in that** the first outlet openings (6) are designed in such a manner that by increasing the intensity of the airflow the adjusting device (4) can be moved from the first (a) into the second (b) state of movement.

6. Ventilating device according to one of the above claims, **characterised in that** the outlet direction of the airflow from the second outlet openings (7) can be altered by the intensity of the airflow.

7. Ventilating device according to Claim 6, **characterised in that** a control device is provided for temporally changeable regulation of intensity of the airflow.

8. Ventilating device according to one of the above claims, **characterised in that** it is arranged essentially centrally at the top of an instrument panel (2) of a motor vehicle.

## Revendications

1. Dispositif de ventilation (1) pour un tableau de bord (2) d'un véhicule automobile ou analogue, comprenant une canalisation d'air (3) pour l'amenée d'air, un dispositif de réglage (4) pour la régulation de l'air amené à la canalisation d'air, le dispositif de réglage comportant des ouvertures d'échappement (6, 7) pour l'échappement du courant d'air à l'intérieur du véhicule automobile (5), le dispositif de réglage étant configuré de telle manière que, dans un premier état de déplacement (a) du dispositif de réglage, le courant d'air dirigé vers l'intérieur du véhicule automobile s'échappe seulement à travers des premières ouvertures d'échappement (6) et, dans un deuxième état de déplacement (b) seulement à travers des deuxièmes ouvertures d'échappement (7), et une plaque d'échappement (9) disposée de manière articulée par rapport à une articulation fixe (8), est munie des premières ouvertures d'échappement (6) et la plaque d'échappement, dans le premier état de déplacement (a), passe au-dessus de la section transversale de sortie de la canalisation d'air (3) et le dispositif de ventilation comporte une plaque de commande (10) disposée de manière articulée des deux côtés, un côté (11) de la plaque de commande étant disposé sur la plaque d'échappement et l'autre côté (12) sur une glissière de guidage linéaire (13) de manière articulée.

2. Dispositif de ventilation selon la revendication 1, **caractérisé en ce que** les premières ouvertures d'échappement (6) sont prévues pour obtenir un écoulement diffus et les deuxièmes ouvertures d'échappement (7) pour obtenir un écoulement dirigé.

3. Dispositif de ventilation selon l'une quelconque des revendications précédentes, **caractérisé en ce que** la plaque d'échappement (9) comporte, du côté opposé à l'articulation fixe (8), des lamelles intermédiaires (19) disposées selon un angle par rapport à l'autre plaque d'échappement et des deuxièmes ouvertures d'échappement.

4. Dispositif de ventilation selon l'une quelconque des revendications précédentes, **caractérisé en ce que** des premières (6) et des deuxièmes (7) ouvertures d'échappement sont séparées par la plaque de commande (10).

5. Dispositif de ventilation selon l'une quelconque des revendications précédentes, **caractérisé en ce que** les premières ouvertures d'échappement (6) sont configurées de telle manière que, en renforçant l'intensité du courant d'air, on peut faire passer le dispositif de réglage (4) du premier (a) au deuxième (b) état de déplacement.

6. Dispositif de ventilation selon l'une quelconque des revendications précédentes, **caractérisé en ce que** l'on peut faire varier le sens de sortie du courant d'air hors des deuxièmes ouvertures d'échappement (7) par l'intensité du courant d'air.

7. Dispositif de ventilation selon la revendication 6, **caractérisé en ce qu'**un dispositif de commande est prévu pour la régulation variable dans le temps de l'intensité du courant d'air.

8. Dispositif de ventilation selon l'une quelconque des revendications précédentes, **caractérisé en ce que** celui-ci est disposé sur le côté supérieur d'un tableau de bord (2) d'un véhicule automobile, sensiblement au centre.
